# EUROPEAN PATENT SPECIFICATION

(11) **EP 2 841 820 B1**
(45) Date of publication and mention of the grant of the patent: **28.03.2018**
(21) Application number: 13716346.5
(22) Date of filing: 19.02.2013
(51) Int. Cl.: F16J 1/00, F04B 3/00, F04B 53/14, F04B 53/16, F16J 10/02, F25B 1/02

(54) **PISTON ASSEMBLY**
KOLBENANORDNUNG
ENSEMBLE PISTON

(30) Priority: 23.04.2012 GB 201207088
(43) Date of publication of application: 04.03.2015
(73) Proprietor: Energy Technologies Institute LLP, Loughborough, Leicestershire LE11 3UZ (GB)
(72) Inventor: HOWES, Jonathan Sebastian, Fareham Hampshire PO15 5TX (GB)
(74) Representative: CSY London
(86) International application number: PCT/GB2013/050396
(87) International publication number: WO 2013/160649

(56) References cited:
- DE-A1-102009 026 596
- FR-A- 1 008 027
- GB-A- 2 482 416
- US-A- 726 218
- US-A- 3 372 648
- US-A1- 2009 145 161

## Description

### TECHNICAL FIELD OF THE INVENTION

The present invention relates generally to a piston assembly and to devices and systems including such an assembly. In particular, it relates to a piston assembly suitable for use in apparatus comprising a heat engine/heat pump, and especially energy storage systems comprising a heat engine/heat pump, where demanding operating conditions apply.

### BACKGROUND OF THE INVENTION

US726218 discloses a refrigeration system in which reciprocating compression apparatus is arranged intermediate of a cooling chamber and storage chamber, a vertical liquid seal being employed between the piston and piston chamber of the compression apparatus. US3372648 relates to a pump head for a pressure pump. FR1008027 relates to a suction pump device with alternative rectilinear motion for multiple purposes.

In a heat engine/heat pump, the piston design needs to be optimised in order to secure energy efficiencies. Applicant's earlier application WO2006/100486 is directed to a heat pump with a high potential coefficient of performance. In that heat pump, an oversquare piston arrangement is used i.e. with a short piston stroke to a large piston diameter ratio and with compression valving or expansion valving provided in the piston face such that gas flow is directly through the piston face, so as to yield a high coefficient of performance. That application teaches a preferred effective piston diameter to piston stroke length ratio of at least 2:1, or at least 3:1 or at least 4:1.

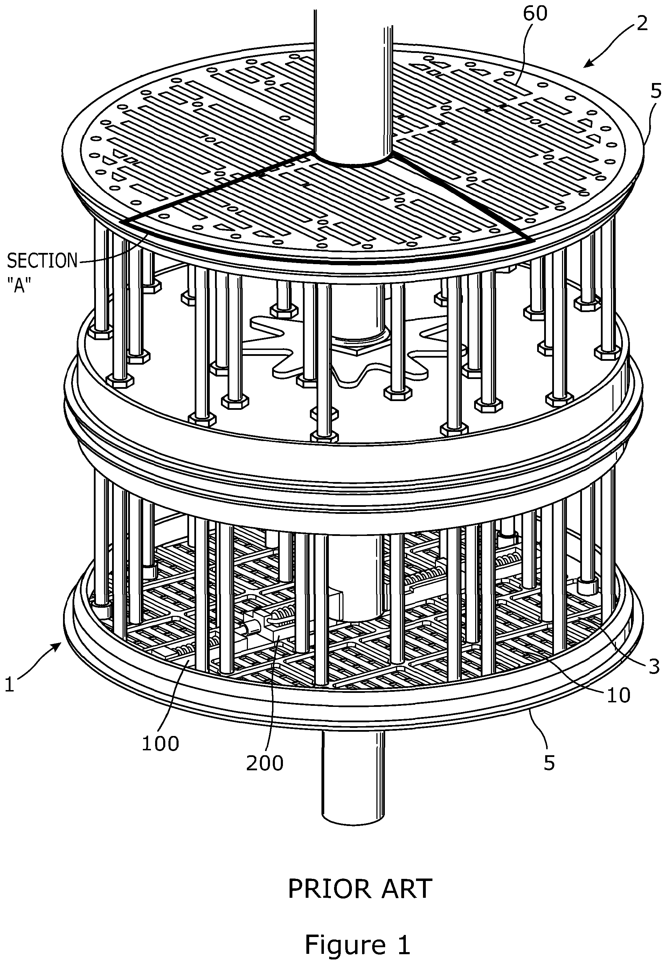

However, where an oversquare piston is especially large in diameter (for example, greater than 20 cm, or greater than 40 cm), it can be difficult to obtain functional piston seals that seal effectively against a piston chamber wall with a long life in an unlubricated environment. For example, Applicant's earlier application WO2009/074800 discloses a double acting piston intended for reciprocating movement within a piston chamber of a piston assembly. Referring to Figure 1, the piston assembly 1 comprises two opposed outer piston faces 2 with valving 60 in their faces provided on a central piston rod and rigidly braced and interconnected by means of a lightweight core structure. In a typical arrangement, piston rings or equivalent sliding seals would be provided, located within external grooves extending circumferentially around the piston core structure for sealing engagement with the stationary chamber walls. An alternative solution in an unlubricated environment is that it is possible to use non-contact seals. Normally these work by using a narrow gap with ribs or grooves on one side of the seal. These are known as labyrinth seals and currently used in many applications. When properly implemented they have low leakage and low friction. However, the larger the piston diameter, the more difficult it is to use labyrinth seals as the size of the gap must remain the same regardless of the piston size. For large diameters this level of accuracy is extremely challenging and consequently an alternative solution is required.

Furthermore, where an oversquare piston assembly is to be used in a heat engine/heat pump for an electrical energy storage apparatus, the requirements for the seal are even more stringent. For example, Applicant's earlier application WO2009/044139 describes a Pumped Heat Energy Storage (PHES) system in which first and second heat stores are placed with a heat pump/engine within a thermal heat pump cycle. The system stores electricity from the grid in the form of a temperature difference by charging in heat pump mode, which may take several hours, and subsequently returns electricity to the grid by discharging in heat engine mode; this can occur several times a day, with the system operating continuously for months between services. During charging in heat pump mode, a gas is compressed by a compression piston assembly of the heat pump causing the gas to rise to an elevated temperature, before being passed through a heat store where it deposits the heat; it is then passed through an expansion piston assembly where it is expanded and cooled to sub-zero temperatures, before passing through a cold store where it deposits the cold by receiving heat from the store and is thereby reheated to its starting point and initial temperature/pressure. During discharging, the cycle reverses. It will therefore be appreciated that any seal in such a piston assembly needs to withstand elevated temperatures, which is likely to require an oil free environment, as well as arduous usage conditions.

The present invention aims to provide a piston assembly and seal arrangement of an improved design that is better suited to operating in the above-mentioned conditions.

### SUMMARY OF THE INVENTION

The present invention provides a positive displacement gas processing device according to claim 1.

Instead of a typical arrangement (c.f. the prior art arrangement of Fig. 1) where a moving piston reciprocates within a stationary piston chamber towards and away from a cylinder head with a circumferential seal mounted around the piston exterior, the present assembly adopts a reverse arrangement in which the chamber in the form of a reciprocating sleeve, moves relative to the cylinder head such that a circumferential static seal may be used to seal the piston chamber in the vicinity of the cylinder head. Such a seal is no longer subject to inertial loads, and hence can be designed with far more freedom. In particular, the seal can be larger and heavier with sacrificial wear zones to confer longevity, which is very important where an oil-free environment is required.

The remote location of the seal also means that the seal as a whole is protected from the peak temperatures that it might have been exposed to if located on the piston, and it can be cooled or warmed by external gas flows, if required. For example, gas temperatures in piston assemblies used in heat engines/pumps for PHES systems may be especially demanding.

In a single-acting piston assembly, the sleeve may have one closed end and one open end and the piston rod will usually be connected to the closed end, and not pass through the internal piston surface; however, in some arrangements, the latter may be required.

The assembly may comprise valving in the internal piston face and/or may also comprise valving in the cylinder head.

The reciprocating sleeve will usually be configured for vertical reciprocation with the static seal disposed in a horizontal plane. In order to minimise (uneven) wear issues associated with gravity, the static seal will usually be configured to occupy a horizontal plane with the sleeve moving upwards and downwards. However, the concept and function of the seal do not rely on a horizontal plane orientation.

The piston assembly may be an oversquare piston assembly. An oversquare (or short-stroke) piston assembly is one in which the piston chamber (i.e. sleeve or cylinder) diameter is greater than the piston stroke length, so as to give a ratio value greater than 1. The assembly is especially suitable for applications where the piston chamber (i.e. sleeve or cylinder) needs to have an effective piston diameter to piston stroke length ratio of at least 2:1, more particularly, 3:1, or even at least 4:1. Again, where the piston assembly forms part of the heat pump/engine of a PHES system, such ratios improve overall cycle efficiency, mainly because the reduced area of cylinder wall minimises gas flow over a conductive surface, and because the ratios allow a large amount of gas to be moved at low velocities.

The sleeve diameter will usually be greater than 20 cm. As soon as the piston assembly exceeds 20 cm, and especially when it exceeds 30 cm, or even 40 cm, it can be beneficial to adopt the present piston arrangement in which the seal is static. Such dimensions may be required in a piston assembly forming part of the heat pump/engine of a PHES system, where large amounts of gas need to be compressed and/or expanded. Such an assembly may comprise compression valving or expansion valving in the internal piston face and may also comprise compression valving or expansion valving in the cylinder head, such that gas flow passes directly through the internal piston face and directly through the cylinder head.

The reciprocating sleeve may have a thin wall such that the sleeve diameter: sleeve wall thickness ratio is at least 20:1, and preferably at least 30:1 or at least 50:1. Such a seal may be subject to lower inertial forces due to its low mass and with have lower thermal conductivity, which may assist to shield the seal arrangement from peak temperatures in the piston chamber.

The static seal may comprise a circumferentially segmented static seal. Because of the increased piston diameter, and the desirability of a lightweight sleeve/cylinder, it will be difficult to form the reciprocating sleeve (i.e. piston chamber) with perfect walls. A circumferentially segmented static seal ring with circumferentially extending segments, as opposed to a continuous ring, can conform better to the slight irregularities likely to be inherent in a larger diameter sleeve. Furthermore, the circumferentially extending segments enable the seal ring to accommodate a large amount of wear of the seal material without opening up any leakage gaps.

In such a static seal, the seal may comprise interlocking, circumferentially extending segments. The segments may be provided with respective mating ends such that they may (releasably) interlock with the ends of adjacent segments, or separate connectors may be used to interlock adjacent segment ends. They may be a drop-in/lift-out fit or a push-in/pull-out fit. Preferably, the ends may be provided with close-fitting male and female features which permit slight angular displacement and, ideally, relative radial translatory displacement in order to permit relative motion and to minimise gas bypass flow. Such features may incorporate slight elastic resilience to permit the interlocking features to be slightly elastically deformed so as to fit exactly with no gaps.

The static seal may comprise a multi-layered static seal comprising respective multiple layers axially disposed from one another. In that case, the interlocking, circumferentially extending segments, may be respectively staggered from one another in the adjacent multiple layers so as to minimise gas flow therethrough. By providing a labyrinthian flow path, undesired escaping gas flow through the seal is minimised. The seal may comprise axially extending locating elements that prevent relative rotation of the multiple layers. Relative rotation of the respective layers may be prevented by locking devices engaging between the respective layers (e.g. axially extending pins and notches). Springs may also be provided in the seal groove to force the seal radially outwards or inwards, depending whether it is sealing outwardly (against the sleeve interior) or sealing inwardly against the sleeve exterior.

In one embodiment, the static seal is mounted on the cylinder head for sealing engagement with an inner wall of the reciprocating sleeve. This arrangement has the advantages that it allows the incoming flow to cool adjacent walls near the seal, and placing the seal here results in a smaller dead volume adjacent to the compression or expansion space, which is thermodynamically preferable.

In an alternative embodiment, the static seal is mounted externally of the reciprocating sleeve for sealing engagement with an outer wall of the sleeve.

The static seal is made from a carbon-based and/or graphite-based material. Such seal materials are referred to as carbon, graphite or "carbon-graphite" seals. Graphite and graphite based materials provide inherent lubrication and low friction and hence, may be used in an oil-free environment, which is usually necessary as soon as operating temperatures exceed ~150°C (where oil starts to vaporise/burn). An oil-free environment will usually be necessary where the piston assembly forms part of a heat engine and/or heat pump forming part of a pumped heat energy storage system, since such systems may easily operate in excess of 400°C, and furthermore, oil vapours are undesirable as they may migrate and pollute or damage the energy storage media.

The seal may be designed with sacrificial width i.e. an in-built external wear zone e.g. for a seal with an overall diameter in excess of 20cm, the overall annular ring width may be greater than 0.8cm, 1.5 or even 2cm. In very large piston sleeves, a ring width of greater than 4 or 5cm may even be appropriate.

The piston assembly may comprise a double-acting piston assembly comprising a reciprocating sleeve having two respective integral internal piston surfaces and two open ends respectively slidably mounted on a pair of opposed, concentric (i.e. axially aligned) cylinder heads such that the respective internal piston surfaces each define a piston chamber with a respective cylinder head, each piston chamber being sealed in the vicinity of the cylinder head by a circumferential static seal that acts to seal against the reciprocating sleeve. Such an arrangement allows the provision of back to back piston chambers where again the seal is more remote from each of the piston chambers.

The piston rod actioning the double-acting piston may pass through one cylinder head and one internal piston surface, or both cylinder heads and both internal piston faces depending on whether there is a need to access the piston rod at the non-crankshaft end of the cylinder eg, to allow a gas feed or valve actuation means to enter via a hollow piston rod.

The reciprocating sleeve may comprise a central structural core disposed between two fixed internal piston faces for additional strength and rigidity. In such an assembly, the central structural core may be hollow and the internal piston surfaces provided with valving that allows gas to pass through each piston surface.

The above double acting piston assembly arrangement is particularly suited for use in heat pumps/heat engines, compressors or expanders, especially ones that are oversquare. The use of a sleeve arrangement allows a greater surface area for valving in the piston face (which is wider than the cylinder head). This is especially important where it is important to have high mass gas flow rates, for example, in the heat pumps/heat engines of a PHES system. For high gas flow rates, the valving in the internal piston faces and in the cylinder heads may comprise multi-apertured reciprocating screen valving.

The sleeve may advantageously comprise openings in the part of its surface surrounding the central structural core configured to permit radial gas flow inwards to the sleeve and/or outwards from the sleeve to a further chamber via the structural core.

The sleeve usually reciprocates within a housing which may form the further chamber or which may communicate with a further chamber via openings in the housing.

The assembly may be configured for operation such that gas flows enter each piston chamber via valving in the cylinder heads and leave radially outwards from the sleeve, and/or wherein the assembly is configured for operation such that gas flows enter each piston chamber radially inwards through the sleeve and leave via valving in the cylinder heads.

In a preferred embodiment, the assembly is configured such that the cylinder heads are in communication with a lower pressure gas supply and the core/sleeve openings are in communication with a higher pressure gas supply.

This flow arrangement is most suited to the sleeve arrangement as it allows the central core structure (subject to higher pressures) to be placed in tension while the sleeve ends are exposed to compressive forces, both of which are preferred modes where the piston assembly may be operating continuously for long periods of time. For example, the assembly may form part of a heat pump/engine where the assembly forms two compression chambers working alternately, where gases enter the chamber via the cylinder head and are compressed to higher pressures (e.g. in excess of 8 or even 10 bar), before leaving radially, for example during the charging cycle of a PHES system. Similarly, the assembly may form two expansion chambers working alternately, for example, during the discharging cycle of a PHES system, whereby gases at higher pressures enter radially and leave at lower pressures via the cylinder head after expansion in the piston chamber.

The piston assembly forms part of a positive displacement piston/cylinder based gas processing device configured to act as a gas compressor and/or gas expander, which may include air compressors, or gas compressors of the reciprocating piston types, including heat pump compressors. The piston assembly may form a compression and/or expansion stage of a system for heating a gas, or for cooling a gas, which may respectively include a compression stage, a heat exchange stage and an expander stage for heating a gas, or an expansion stage, a heat exchanger stage and a compression stage for cooling a gas. There is further provided a heat pump and/or a heat engine comprising a piston assembly as described above. The piston assembly may also form part of a piston engine, for example, hot air or hot gas engines (as opposed to IC engines), which may be Stirling or Stirling type engines. The important distinction between these engines and Internal Combustion (IC) engines is that the heat is applied to the gas externally to the engine, whereas in the IC engine, fuel is burned inside the operating cylinders of the engine. Another class of engine to which the seal could potentially be applied is the steam engine.

The above could all be used with the present seal/sleeve arrangement and this would be especially advantageous where oil-free versions were required.

There is further provided an energy storage system comprising such a heat pump and/or a heat engine.

The energy storage system may comprise a pumped heat energy storage system (PHES) comprising apparatus for storing electrical energy as thermal energy comprising:-
a compression chamber;
an inlet for allowing gas to enter the compression chamber;
compression piston for compressing gas contained in the compression chamber;
a first thermal store for receiving and storing thermal energy from gas compressed by the compression piston;
an expansion chamber for receiving gas after exposure to the first thermal store;
an expansion piston for expanding gas received in the expansion chamber; and
an outlet for venting gas from the expansion chamber after expansion thereof;
a second thermal store for transferring thermal energy to gas expanded by the expansion piston;
wherein the compression chamber and/or the expansion chamber form part of a piston assembly as described above.

### BRIEF DESCRIPTION OF THE DRAWINGS

The present invention will now be described, by way of example only, with reference to the accompanying drawings in which:-
Fig.1 shows a perspective view of a prior art double-acting piston assembly;
Fig. 2 shows a single-acting piston with a reciprocating cylindrical sleeve and internal static seal;
Fig. 3 shows the same arrangement as Fig 2, but with the piston and reciprocating sleeve in the top position, closest to the cylinder head;
Fig. 4 shows a single-acting piston with a reciprocating cylindrical sleeve and external static seal;
Fig. 5 shows a double-acting piston with a reciprocating cylindrical sleeve and internal seals;
Figs. 6a and 6b are respective perspective views of a double layered, segmented static seal with one segment and several part segments removed, respectively;
Fig. 7 shows an arrangement for interlocking the seal segments; and,
Fig. 8 shows an alternative double-acting piston with a reciprocating cylindrical sleeve and internal seals and with piston valving in piston surfaces and cylinder heads.

### DETAILED DESCRIPTION

As discussed above, Fig.1 shows a perspective view of a prior art double-acting piston mounted on a piston rod for reciprocation within a stationary piston chamber (not shown) towards and away from two opposed concentric cylinder heads (not shown) with a circumferential seal conventionally mounted around the piston exterior. Valving is provided in both piston faces in the form of multi-apertured screen valves.

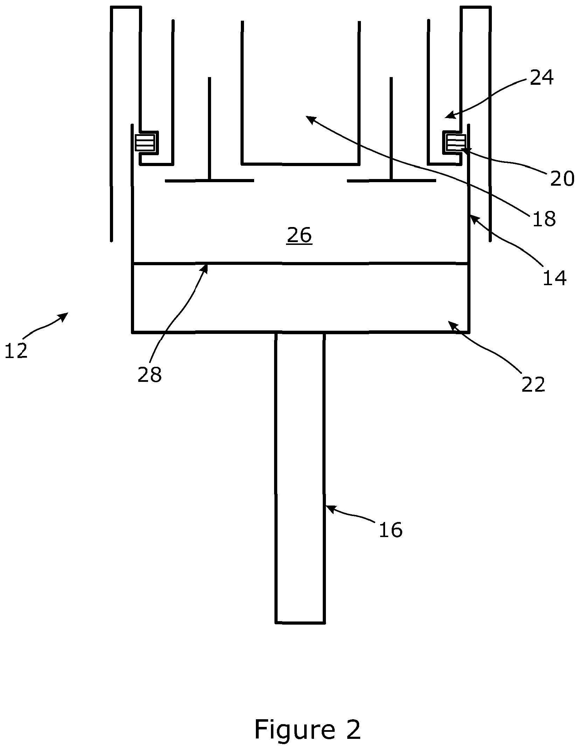

Fig. 2 shows a single-acting piston assembly 12 according to the present invention with a reciprocating cylindrical sleeve 14 mounted on a piston rod 16 for reciprocation towards and away from a cylinder head 18 containing valving. Such an assembly could be used in a heat pump or any other positive displacement, piston/cylinder based fluid or gas processing device such as, for example, a heat engine, gas expander or compressor.

The present Applicant has arrived at a piston/seal arrangement that may be used to make a piston assembly that can be large and/or oversquare, may still be light-weight if desired, and may have adequate sealing and seal longevity and that is suitable for use in an oil-free environment.

The sleeve 14 has an internal integral piston surface 28 (i.e. the surface and sleeve form a single article and the surface cannot move relative to the sleeve) defining together with the cylinder head 18 a piston chamber 26. The sleeve engages with a static seal 20, which is mounted in a seal groove in a seal housing 24, and which seals against the inner surface of the sleeve 14.

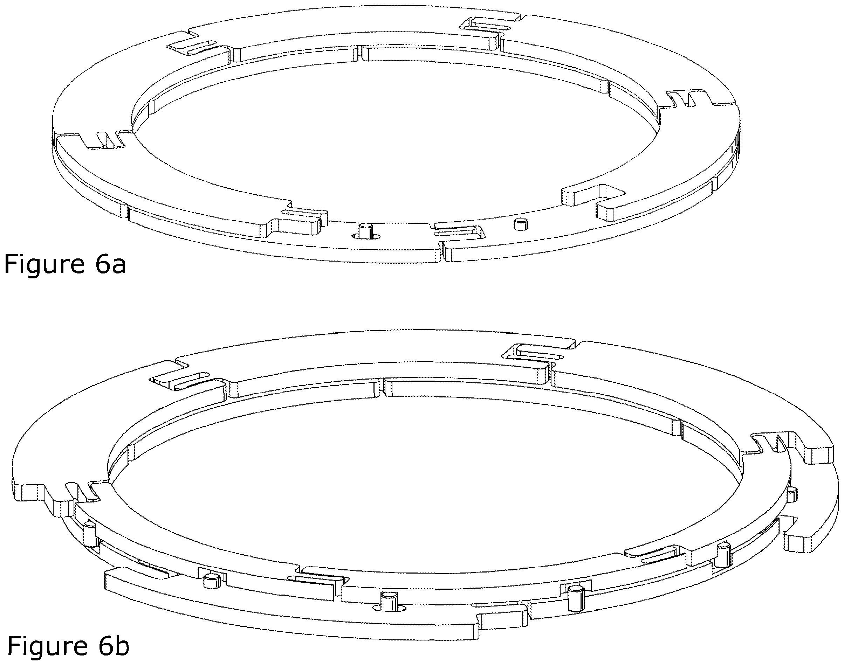

Such a static seal is not subject to inertial loads, and hence can be designed with more freedom. In particular, the seal can be larger and heavier with sacrificial wear zones to confer longevity. The seal ring is further described with reference to Figs. 6.

The remote location of the seal means that the seal as a whole is protected from the peak temperatures that it might have been exposed to if located on the piston, and it can be cooled or warmed by external gas flows, if required. For example, gas temperatures in piston assemblies used in heat engines/pumps in PHES systems may be as high as >200°C, or >400°C or >450°C, or may be as low as < -50°C, or <-100°C, or even <-150°C in the expansion stage. Furthermore, the portion of the reciprocating sleeve 14 that is in contact with the seal is not continuously in contact with the high (or low) temperature gas flow. The proportion of time in contact with the high (or low) temperature gas varies at different positions along the length of the sleeve, and on average is approximately 50%. This means that the temperature of the parts of the sleeve in contact with the seal will be less extreme (hot or cold) than the gas temperatures. This has advantages for the seal in terms of wear rate, and choice of materials.

In order to minimise (uneven) wear issues associated with gravity, the static seal occupies a horizontal plane with the sleeve moving upwards and downwards. In this Figure, the piston 22 is shown in its bottom position, furthest away from the cylinder head.

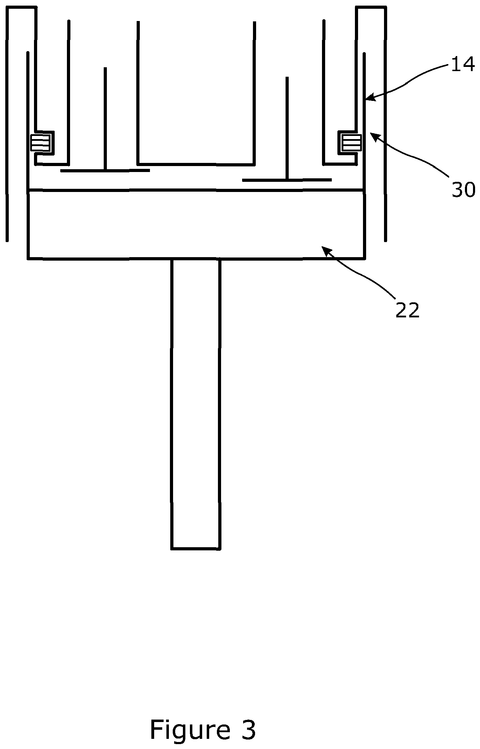

Fig. 3 shows the same piston assembly arrangement as Fig 1, but with the piston 22 and reciprocating sleeve in the top position, closest to the cylinder head; hence, the ends of the sleeve extend further into an annular end receiving channel 30.

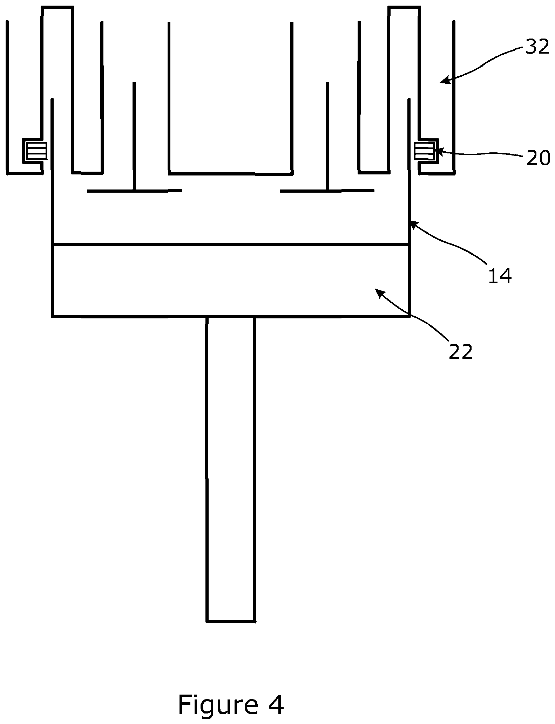

Fig. 4 shows an alternative piston assembly arrangement to Figures 2 and 3, where the static seal is mounted in a different position in a seal groove of an annular housing 32 so as to seal against the outer surface of the reciprocating sleeve. This is an even more remote location for the seal which may sometimes be desirable because it can allow more thermal control of the seal operating environment at the cost of a bit more dead volume.

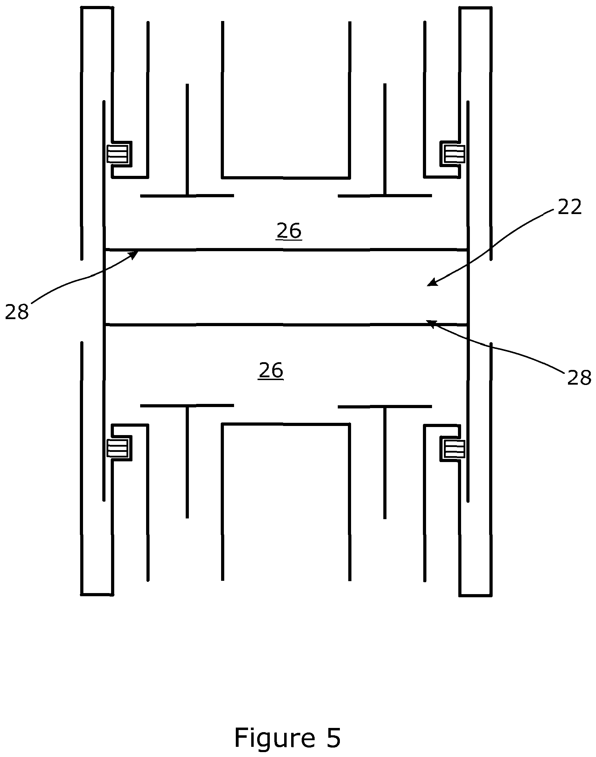

Fig 5 shows the same arrangement as Fig 1, but for an over square double-acting piston 22 where the sleeve has two respective integral internal piston surfaces 28 and two open ends respectively slidably mounted on a pair of opposed, concentric (i.e. axially aligned) cylinder heads such that the respective internal piston surfaces 28 each define a piston chamber 26 with a respective cylinder head. This arrangement could be used as two compression chambers or two expansion chambers (where the core will exposed to the same temperatures on either side), or as back to back expansion and compression chambers.

Such an arrangement allows the provision of back to back piston chambers where the seal again benefits from being more remote from each of the piston chambers. The piston rod (which may pass through one or both cylinder heads and which may contain valve actuation mechanisms) and its seals are omitted from the diagram for clarity.

The internal piston surfaces 28 may form two sides of a single partition across the cylindrical sleeve, but usually it is desirable for them to be provided as outer faces of a central structural core which reinforces the sleeve.

The sleeve ends are received within annular end receiving chambers surrounding the respective cylinder heads, which chambers may form part of a housing encasing the sleeve assembly.

Figs. 6a and 6b are perspective views of a double layered, segmented static seal suitable for use in the above piston assemblies; the views show one segment removed and several part segments removed, respectively.

This seal is made of a graphite-based material that provides inherent lubrication allowing the piston sleeve to operate in an oil-free environment.

Generally, for a high temperature seal, materials that could be used are, for example, carbons, graphite, carbon-graphite mixtures (maybe compounded with high temperature binding resins), ceramics, or cermets (ceramic-metal composites). Any of these may incorporate proportions of solid lubricants, and reinforcements of various fibres including carbon fibre, asbestos, and others. Preferably, the desired material requirements are: temperature resistance (hot or cold), good wear resistance, dry-running capability (i.e. containing solid lubricants), and low friction.

For such sleeves, a seal ring with circumferentially extending segments, as opposed to a continuous ring, can conform better to the slight irregularities likely to be inherent in the larger diameter sleeve. The segments enable the seal ring to accommodate a large amount of wear of the seal material without opening up any leakage gaps. (In an oil-free environment, the seal will wear at a much higher rate.) The seal is shown with two layers of graphite-based segments interconnected by extending joints, although three or four layers could also be used. For segmented seals, multiple layers are usually needed to block the inevitable gaps that exist between adjacent segments, and the joints are staggered from one another between the respective layers so that one layer blocks the inter-segment gaps of the adjacent layer(s), thereby creating a more tortuous path for escaping gas. Multiple layers also make the seal more damage tolerant, the first two layers adjacent to the seal seat provide the bulk of the sealing, while other layers are there initially as a back-up but in case of any damage or uneven wear will then provide enhanced sealing.

Relative rotation of the respective layers is prevented by locating intra-layer pins extending from one layer to occupy corresponding notches in the other layer. Other suitable locating mechanisms could also be used.

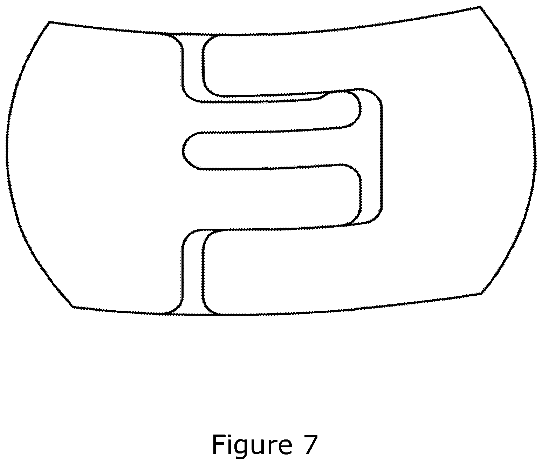

Fig. 7 shows one suitable mechanism for interlocking adjacent segment ends in a layer. This is a push-fit connection where each segment has respective female and male ends, the latter having two sprung (i.e. resilient) fingers that are placed under slight compression once interlocked with another segment, thereby minimising gas bypass flow. This configuration allows a small amount of radial displacement to one segment end of a pair of segment ends. Other interference fit type connections could be used that allow more radial displacement and/or more relative angular displacement of segment ends. Also, the segments could be provided with all male ends, and a two-ended female connector could be used as a separate component pushed in as a push-fit to the segment ends, or vice versa (with a two-ended male connector).

The seal may be held in contact against the sealing surface by gas pressure in the recess behind the seal. The recess may be so designed to enable the full pressure of the gas to enter the recess, whereas on the sealing surface the effective average gas pressure may be approximately half of the full pressure. The difference between the pressure behind the seal and the effective pressure at the sealing surface may provide a net mechanical force pressing the seal into contact. Detailed design of the geometry can alter the magnitude of this force to provide an optimum compromise between sealing efficiency and mechanical friction and wear. There may optionally be an additional mechanical spring loading, which is usually relatively small in magnitude, to control the seal position under conditions of low or zero or negative relative gas pressure, which may occur at various points in the cycle of operation.

Springs may also be provided in the seal groove to force the seal radially outwards or inwards, depending on whether it is sealing outwardly against the sleeve interior or sealing inwardly against the sleeve exterior.

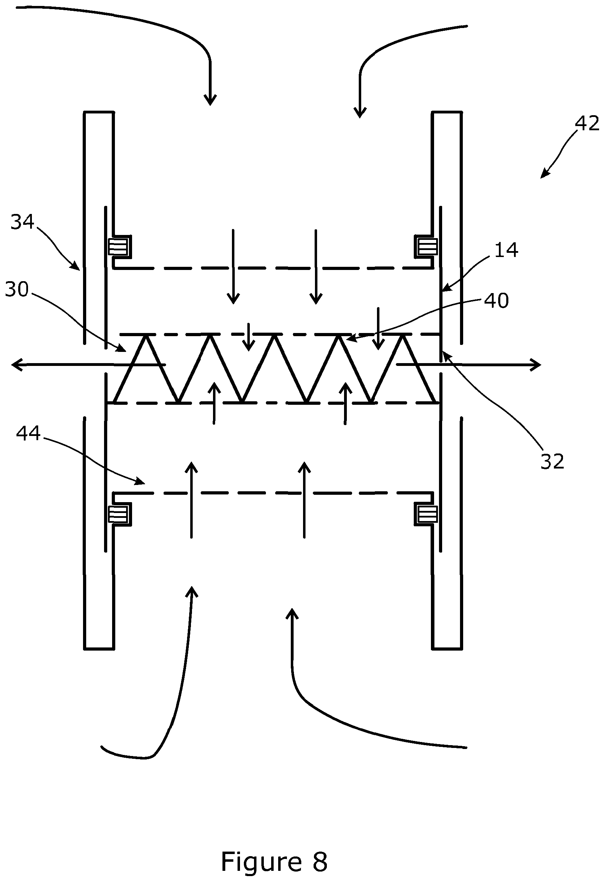

Fig. 8 shows an alternative oversquare, double-acting piston assembly 42 that is particularly suited for use in heat pumps/heat engines. Both of the internal piston surfaces 40 are provided with valving that allows gas to pass through each piston surface, as are the cylinder heads 44. The use of a sleeve arrangement 14 allows a greater surface area for valving in the piston face 40 (which is wider than the cylinder head). This is especially important where high mass gas flow rates are used, for example, in the heat pumps/heat engines of a PHES system. For high gas flow rates, the valving in the internal piston faces 40 and in the cylinder heads 44 may comprise multi-apertured screen valving as described in WO2009/074800.

In this case, the reciprocating sleeve 14 again has a central structural core 30 disposed between the two fixed internal piston faces 40 for strength and rigidity, but the core is hollow and comprises openings 32 in the sleeve wall that allow radial gas flow inwards to, or outwards from, the sleeve 14 to a further chamber via the structural core.

The sleeve reciprocates within a housing 34 which may form the further chamber or which may communicate with a further chamber via openings in the housing.

The assembly 42 is shown configured for operation such that gas flows enter each piston chamber via the valving in the cylinder heads 44, passes through the valving in the internal piston surfaces and leaves radially outwards from the sleeve 14 through openings 32. Equally, however, the assembly may be configured for operation such that gas flows enter each piston chamber radially inwards through the sleeve openings 32, passes through the valving in the internal piston surfaces and leaves via valving in the cylinder heads 44. In a gas cycle system where the flow reverses such as, for example, a PHES system, the flow may alternate between these two modes depending upon whether the system is charging or discharging.

Ideally, the assembly is configured such that the cylinder heads 44 communicate with a lower pressure gas supply and the core/sleeve openings 32 communicate with a higher pressure gas supply (i.e. gas enters or leaves the cylinder heads at a lower pressure and gas enters or leaves the sleeve at a higher pressure e.g. in excess of 8 bar). This flow arrangement is most suited to the sleeve arrangement as it allows the central core structure (subject to higher pressures) to be placed in tension while the sleeve ends are exposed to compressive forces, both of which are preferred modes where the piston assembly may be operating continuously for long periods of time. For example, the assembly may form part of a heat pump/engine where the assembly forms two compression chambers working alternately, where gases enter the chamber via the cylinder head and are compressed to higher pressures (e.g. in excess of 8 or even 10 bar), before leaving radially, for example during the charging cycle of a PHES system. Similarly, the assembly may form two expansion chambers working alternately, for example, during the discharging cycle of a PHES system, whereby gases at higher pressures enter radially and leave at lower pressures via the cylinder head after expansion in the piston chamber.

Although described primarily for use in heat pumps/heat engines, the present piston arrangement may also be employed in any positive displacement, piston/cylinder based gas processing device.

## Claims

1. A positive displacement gas processing device comprising a piston assembly configured to act as a gas compressor and/or a gas expander operating at an operating temperature in excess of 150°C in an oil-free environment,
the piston assembly (12) comprising a reciprocating sleeve (14) incorporating an integral internal piston surface (28), which sleeve is slidably mounted upon a cylinder head (18) so as to define a piston chamber (26) therewith, the piston chamber being sealed in the vicinity of the cylinder head by a circumferential static seal (20) that acts to seal against the reciprocating sleeve, said static seal (20) being made from a carbon-based and/or graphite-based material.

2. A device according to claim 1, wherein the piston chamber (26) has an effective piston diameter to piston stroke length ratio of at least 2:1.

3. A device according to claim 1 or 2, wherein the sleeve diameter is greater than 20 cm.

4. A device according to any preceding claim, wherein the reciprocating sleeve (14) has a thin wall such that the sleeve diameter: sleeve wall thickness ratio is at least 20:1.

5. A device according to any preceding claim, wherein the reciprocating sleeve (14) is configured for vertical reciprocation with the static seal (20) disposed in a horizontal plane.

6. A device according to any preceding claim, wherein the static seal (20) comprises a circumferentially segmented static seal.

7. A device according to claim 6, wherein the circumferentially segmented static seal has interlocking, circumferentially extending segments.

8. A device according to any preceding claim, wherein the static seal (20) comprises a multi-layered static seal comprising respective multiple layers axially disposed from one another.

9. A device according to any preceding claim, wherein the static seal (20) is mounted on the cylinder head (18) for sealing engagement with an inner surface of the reciprocating sleeve (14).

10. A device according to any of claims 1 to 8, wherein the static seal (20) is mounted externally of the reciprocating sleeve (14) for sealing engagement with an outer surface of the sleeve.

11. A positive displacement gas processing device comprising a double-acting piston assembly configured to act as a gas compressor and/or a gas expander operating at an operating temperature in excess of 150°C in an oil-free environment, the double-acting piston assembly (42) comprising a reciprocating sleeve (14) having two respective integral internal piston surfaces (40) and two open ends respectively slidably mounted on a pair of opposed, concentric cylinder heads (44) such that the respective internal piston surfaces each define a piston chamber with a respective cylinder head, each piston chamber being sealed in the vicinity of the cylinder head by a circumferential static seal that acts to seal against the reciprocating sleeve, wherein the reciprocating sleeve (14) comprises a central structural core (30) disposed between the two integral internal piston surfaces (40), and wherein the central structural core is hollow and the internal piston surfaces are provided with valving that allows the gas to pass through each piston surface, each static seal (20) being made from a carbon-based and/or graphite-based material.

12. A device according to claim 11, wherein the sleeve (14) comprises openings (32) in the part of its surface surrounding the central structural core (30) configured to permit radial gas flow inwards to the sleeve and/or outwards from the sleeve to a further chamber via the structural core.

13. A device according to claim 12, wherein the piston assembly (42) is configured for operation such that gas flows enter each piston chamber via valving in the cylinder heads (44), pass through the valving in the internal piston surfaces (40) and leave radially outwards from the sleeve (14), and/or wherein the piston assembly (42) is configured for operation such that gas flows enter each piston chamber radially inwards through the sleeve, pass through the valving in the internal piston surfaces and leave via valving in the cylinder heads.

14. A system comprising a positive displacement gas processing device according to any preceding claim, wherein the system comprises a heat pump and/or a heat engine and/or an energy storage system.

## Patentansprüche

1. Verdrängungs- Gasverarbeitungsvorrichtung, die eine Kolbenanordnung aufweist, die ausgebildet ist, um als Gaskompressor und/oder Gasexpander zu arbeiten, der bei einer Betriebstemperatur von über 150°C in einer öl-freien Umgebung in Betrieb ist, wobei die Kolbenanordnung (12) eine hin-und hergehende Hülse (14) aufweist, die eine damit einteilige innere Kolbenfläche (28) enthält, wobei die Hülse verschiebbar auf einem Zylinderkopf (18) angebracht ist, um damit eine Kolbenkammer (26) zu begrenzen, wobei die Kolbenkammer in der Nähe des Zylinderkopfes durch eine umlaufende statische Dichtung (20) abgedichtet ist, die wirkt, um gegen die hin-und hergehende Hülse abzudichten, wobei die statische Dichtung (20) aus einem kohlenstoffhaltigen und/oder graphithaltigen Material hergestellt ist.

2. Vorrichtung nach Anspruch 1, bei der die Kolbenkammer (26) ein wirksames Kolbendurchmesser-zu-Kolbenhublängen-Verhältnis von mindestens 2:1 hat.

3. Vorrichtung nach Anspruch 1 oder 2, bei der der Hülsendurchmesser größer als 20 cm ist.

4. Vorrichtung nach irgendeinem vorhergehenden Anspruch, bei der die hin-und hergehende Hülse (14) eine derart dünne Wand hat, dass das Hülsendurchmesser: Hülsenwanddicken-Verhältnis mindestens 20:1 ist.

5. Vorrichtung nach irgendeinem vorhergehenden Anspruch, bei der die hin-und hergehende Hülse (14) für eine vertikale hin- und hergehende Bewegung ausgebildet ist, wobei die statische Dichtung (20) in einer horizontalen Ebene angeordnet ist.

6. Vorrichtung nach irgendeinem vorhergehenden Anspruch, bei der die statische Dichtung (20) eine in Umfangsrichtung segmentierte statische Dichtung umfasst.

7. Vorrichtung nach Anspruch 6, bei der die in Umfangsrichtung segmentierte statische Dichtung ineinander greifende, in Umfangsrichtung verlaufende Segmente hat.

8. Vorrichtung nach irgendeinem vorhergehenden Anspruch, bei der die statische Dichtung (20) eine mehrschichtige statische Dichtung umfasst, die dementsprechend mehrere Schichten umfasst, die axial voneinander angeordnet sind.

9. Vorrichtung nach irgendeinem vorhergehenden Anspruch, bei der die statische Dichtung (20) an dem Zylinderkopf (18) zum Dichtungseingriff mit einer inneren Oberfläche der hin-und hergehenden Hülse (14) angebracht ist.

10. Vorrichtung nach irgendeinem der Ansprüche 1 bis 8, bei der die statische Dichtung (20) außerhalb der hin-und hergehenden Hülse (14) zum Dichtungseingriff mit einer äußeren Oberfläche der Hülse angebracht ist.

11. Verdrängungs- Gasverarbeitungsvorrichtung, die eine doppeltwirkende Kolbenanordnung aufweist, die ausgebildet ist, um als Gaskompressor und/oder als Gasexpander zu arbeiten, der bei einer Betriebstemperatur von über 150°C in einer öl-freien Umgebung in Betrieb ist, wobei die doppeltwirkende Kolbenanordnung (42) eine hin-und hergehende Hülse (14) aufweist, die zwei zugehörige, damit einteilige innere Kolbenflächen (40) und zwei offene Enden hat, die jeweils verschiebbar an einem Paar von sich gegenüberliegenden konzentrischen Zylinderköpfen (44) derart angebracht sind, dass die jeweiligen inneren Kolbenflächen jeweils eine Kolbenkammer mit einem jeweiligen Zylinderkopf begrenzen, wobei jede Kolbenkammer in der Nähe des Zylinderkopfes durch eine umlaufende statische Dichtung abgedichtet ist, die wirkt, um gegen die hin-und hergehende Hülse abzudichten, wobei die hin-und hergehende Hülse (14) einen zentralen baulichen Kern (30) aufweist, der zwischen den beiden damit einteiligen inneren Kolbenflächen (40) angeordnet ist, und wobei der zentrale, bauliche Kern hohl ist und die inneren Kolbenflächen mit einer Ventileinrichtung versehen sind, die dem Gas gestattet, durch jede Kolbenfläche hindurchzugehen, wobei jede statische Dichtung (20) aus einem kohlenstoffhaltigen und/oder graphithaltigen Material hergestellt ist.

12. Vorrichtung nach Anspruch 11, bei der die Hülse (14) Öffnungen (32) in dem Teil ihrer Oberfläche aufweist, der den zentralen baulichen Kern (30) umgibt, die ausgebildet sind, um einen radialen Gasstrom einwärts zu der Hülse und/oder auswärts von der Hülse zu einer weiteren Kammer über den baulichen Kern zu gestatten.

13. Vorrichtung nach Anspruch 12, bei dem die Kolbenanordnung (42) für einen derartigen Betrieb ausgebildet ist, dass Gasströme in jede Kolbenkammer über eine Ventileinrichtung in den Zylinderköpfen (44) eintreten, durch die Ventileinrichtung (40) in den inneren Kolbenflächen(40) hindurchtreten und radial auswärts aus der Hülse (14) austreten, und/oder wobei die Kolbenanordnung (42) für einen derartigen Betrieb ausgebildet ist, dass Gasströme in jede Kolbenkammer radial einwärts durch die die Hülse eintreten, durch die Ventileinrichtung in den inneren Kolbenflächen hindurchtreten und über eine Ventileinrichtung in den Zylinderköpfen austreten.

14. System, das eine Verdrängungs-Gasverarbeitungsvorrichtung nach irgendeinem vorhergehenden Anspruch umfasst, wobei das System eine Wärmepumpe und/oder eine Wärmekraftmaschine und/oder ein Energiespeichersystem umfasst.

## Revendications

1. Dispositif de traitement de gaz à déplacement positif comprenant un ensemble de piston configuré pour agir comme un compresseur de gaz et/ou un détendeur de gaz fonctionnant à une température de fonctionnement supérieure à 150 °C dans un environnement sans huile, l'ensemble de piston (12) comprenant un manchon à mouvement alternatif (14) incorporant une surface de piston interne intégrée (28), lequel manchon est monté de manière coulissante sur une culasse (18) de manière à définir une chambre de piston (26) avec celle-ci, la chambre de piston étant scellée à proximité de la culasse par un joint statique circonférentiel (20) qui agit pour se sceller contre le manchon à mouvement alternatif, ledit joint statique (20) étant constitué d'un matériau à base de carbone et/ou à base de graphite.

2. Dispositif selon la revendication 1, dans lequel la chambre de piston (26) a un rapport effectif entre le diamètre de piston et la longueur de course de piston d'au moins 2:1.

3. Dispositif selon la revendication 1 ou 2, dans lequel le diamètre de manchon est supérieur à 20 cm.

4. Dispositif selon l'une quelconque des revendications précédentes, dans lequel le manchon à mouvement alternatif (14) a une paroi mince de sorte que le rapport diamètre de manchon: épaisseur de paroi de manchon est d'au moins 20:1.

5. Dispositif selon l'une quelconque des revendications précédentes, dans lequel le manchon à mouvement alternatif (14) est configuré pour un mouvement alternatif vertical avec le joint statique (20) disposé dans un plan horizontal.

6. Dispositif selon l'une quelconque des revendications précédentes, dans lequel le joint statique (20) comprend un joint statique circonférentiellement segmenté.

7. Dispositif selon la revendication 6, dans lequel le joint statique circonférentiellement segmenté comporte des segments s'emboîtant, s'étendant circonférentiellement.

8. Dispositif selon l'une quelconque des revendications précédentes, dans lequel le joint statique (20) comprend un joint statique multicouche comprenant de multiples couches respectives disposées axialement les unes par rapport aux autres.

9. Dispositif selon l'une quelconque des revendications précédentes, dans lequel le joint statique (20) est monté sur la culasse (18) pour venir en prise de manière étanche avec une surface intérieure du manchon à mouvement alternatif (14).

10. Dispositif selon l'une quelconque des revendications 1 à 8, dans lequel le joint statique (20) est monté à l'extérieur du manchon à mouvement alternatif (14) pour venir en prise de manière étanche avec une surface extérieure du manchon.

11. Dispositif de traitement de gaz à déplacement positif comprenant un ensemble de piston à double action configuré pour agir comme un compresseur de gaz et/ou un détendeur de gaz fonctionnant à une température de fonctionnement supérieure à 150 °C dans un environnement sans huile, l'ensemble de piston à double action (42) comprenant un manchon à mouvement alternatif (14) ayant deux surfaces de piston internes intégrées respectives (40) et deux extrémités ouvertes montées respectivement de manière coulissante sur une paire de culasses concentriques opposées (44) de sorte que les surfaces de piston internes respectives définissent chacune une chambre piston avec une culasse respective, chaque chambre de piston étant scellée à proximité de la culasse par un joint statique circonférentiel qui agit pour se sceller contre le manchon à mouvement alternatif, dans lequel le manchon à mouvement alternatif (14) comprend un noyau structurel central (30) disposé entre les deux surfaces de piston internes intégrées (40), et dans lequel le noyau structurel central est creux et les surfaces de piston internes sont munies d'une soupape qui permet au gaz de traverser chaque surface de piston, chaque joint statique (20) étant constitué d'un matériau à base de carbone et/ou à base de graphite.

12. Dispositif selon la revendication 11, dans lequel le manchon (14) comprend des ouvertures (32) dans la partie de sa surface entourant le noyau structurel central (30) configurées pour permettre un écoulement radial de gaz vers l'intérieur du manchon et/ou vers l'extérieur du manchon dans une autre chambre via le noyau structurel.

13. Dispositif selon la revendication 12, dans lequel l'ensemble de piston (42) est configuré pour fonctionner de telle sorte que les flux de gaz pénètrent dans chaque chambre de piston via une soupape dans les culasses (44), passent à travers la soupape dans les surfaces de piston internes (40) et sortent radialement à l'extérieur du manchon (14), et/ou dans lequel l'ensemble de piston (42) est configuré pour fonctionner de telle sorte que les flux de gaz pénètrent dans chaque chambre de piston radialement vers l'intérieur à travers le manchon, traversent la soupape dans les surfaces de piston internes et sortent via la soupape dans les culasses.

14. Système comprenant un dispositif de traitement de gaz à déplacement positif selon l'une quelconque des revendications précédentes, dans lequel le système comprend une pompe à chaleur et/ou un moteur thermique et/ou un système de stockage d'énergie.
